# EUROPEAN PATENT SPECIFICATION

(11) **EP 3 696 001 B1**
(45) Date of publication and mention of the grant of the patent: **07.09.2022**
(21) Application number: 18865936.1
(22) Date of filing: 11.10.2018
(51) Int. Cl.: B60K 1/00, H02K 9/00, H02K 9/19, B60K 11/02

(54) **ELECTRIC DRIVING SYSTEM AND VEHICLE COMPRISING ELECTRIC DRIVING SYSTEM**
ELEKTRISCHES ANTRIEBSSYSTEM UND FAHRZEUG MIT ELEKTRISCHEM ANTRIEBSSYSTEM
SYSTÈME D'ENTRAÎNEMENT ÉLECTRIQUE ET VÉHICULE COMPRENANT UN SYSTÈME D'ENTRAÎNEMENT ÉLECTRIQUE

(30) Priority: 12.10.2017 CN 201710946004
(43) Date of publication of application: 19.08.2020
(73) Proprietor: NIO (Anhui) Holding Co., Ltd., Hefei City, Anhui Province (CN)
(72) Inventor: WEN, Jingzhao, Shanghai (CN); ZHANG, Liang, Shanghai (CN); XIA, Ji, Shanghai (CN); HUANG, Xiangfei, Shanghai (CN); YUAN, Feng, Shanghai (CN)
(74) Representative: Vossius & Partner Patentanwälte Rechtsanwälte mbB
(86) International application number: PCT/CN2018/109838
(87) International publication number: WO 2019/072209

(56) References cited:
- WO-A1-2017/054687
- CN-A- 103 973 049
- CN-A- 103 973 049
- CN-A- 106 300 779
- CN-A- 106 505 791
- CN-A- 108 569 125
- CN-U- 203 600 988
- CN-U- 205 141 906
- CN-U- 206 023 443
- CN-U- 207 889 512
- JP-A- 2000 083 351

## Description

### FIELD OF THE INVENTION

The invention involves an electric drive system and an automobile comprising the electric drive system.

### BACKGROUND OF THE INVENTION

A motor drive system includes a power electronic converter and a respective controller. A power electronic converter is composed of solid state devices, primarily acting to transfer a large amount of energy from the power source to the motor input end. The controller is typically comprised of a microcontroller or digital signal processor and associated small signal electronic circuitry, the primary role of which is to process information and to produce switching signals required for semiconductor switch devices of the power converter.

Nowadays, the motor and the motor controller are electrically connected through high-voltage wiring harness and a cooling system of the two is formed employing water pipes between the two, the wiring harness connection is high in cost, and the temperature rising of the wiring harness limits the overcurrent capacity of the electric drive system, in addition, the water pipes are long and occupy large space.

CN103973049A relates to a motor. The motor includes a motor housing, and a motor controller is arranged on the motor housing. The housing of the motor controller has a heat-conducting wall plate, and a cooling box for cooling the heat-conducting wall plate is arranged between the heat-conducting wall plate and the motor housing. The cooling box has an inlet for the cooling medium to enter and an outlet for the cooling medium to flow out. The reference provides a solution to directly integrate and assemble the motor controller onto the motor.

### SUMMARY OF THE INVENTION

The invention for which protection is sought is defined by the independent claim. The dependent claims concern particular embodiments.

One aspect involved in the invention is to provide an electric drive system, comprising: a motor, a motor controller, and a heat dissipating device located between the motor and the motor controller, the heat dissipating device comprises at least a first space and a second space which is separated from the first space, wherein, the extended terminal of the motor is electrically connected with the extended terminal of the motor controller within the first space, a runner is disposed within the second space, so that coolant liquid is conveyed between the motor controller and the motor through the runner.

In one embodiment of the electric drive system, the first space is disposed with a first inlet facing the motor so that the extended terminal of the motor enters the first space via the first inlet, and is disposed with a second inlet facing the motor controller so that the extended terminal of the motor controller enters the first space via the second inlet, the extended terminal and the extended terminal are electrically connected within the first space, the second space is disposed with a runner port in communication with the runner and facing the motor, and is disposed with a runner port in communication with the runner and facing the motor controller.

In one embodiment of the electric drive system, the motor and the motor controller are arranged on opposite sides of the heat dissipating device.

In one embodiment of the electric drive system, a gearbox connected with the motor and the motor controller is located between the motor and the motor controller, and the heat dissipating device is fixed on the gearbox.

In one embodiment of the electric drive system, the runner port disposed facing the motor controller is adjacent to the second inlet, and the runner port disposed facing the motor is adjacent to the first inlet.

In one embodiment of the electric drive system, the runner is arranged to be bent below the place where the terminals of the motor and the motor controller are connected to increase the cooling area of the runner to the terminals.

In one embodiment of the electric drive system, the terminal of the motor or the motor controller is a plurality of bus bars for a multi-phase electrical connection of the motor or the motor controller, and the terminal of the motor and the terminal of the motor controller are correspondingly connected inside the heat dissipating device.

In one embodiment of the electric drive system, the heat dissipating device comprises a thermally conductive insulating pad which is arranged between the terminals of the motor and motor controller and the runner.

Another aspect of the invention is to provide an automobile comprising the electric drive system of any of the embodiments described above, the electric drive system being arranged in the front of, on the rear of, or in the front of and on the rear of the automobile.

Inside the heat dissipating device of the invention, separated operating spaces are divided for different purposes, the extended terminal of the motor is electrically connected with the extended terminal of the motor controller within the first space. The runner is disposed within the second space, and the coolant liquid is conveyed between the motor controller and the motor through the runner.

The terminals of the motor and the motor controller are connected within the first space through the first inlet and the second inlet, and the cooling system of the motor controller and the cooling system of the motor are connected through the runner via the runner port facing the motor controller and the runner port facing the motor. The heat produced by the terminal connection is dissipated with the runner, the terminal temperature is reduced, and the overcurrent and power capacity of the electric drive system are improved.

The electric drive system is an integrated electric drive system that integrates the motor, the motor controller, and the gearbox. Not only does an electrical connection between the motor and the motor controller be realized inside the heat dissipating device without redundant wiring harnesses, but the integration of the cooling systems of the motor and the motor controller and the vehicle cooling system is also realized, and compared with an original water pipe connection, the runner arrangement may shorten the length and save space.

The various inlets and outlets of the heat dissipating device of the invention are in hermetically abutment with the motor or the motor controller, and the heat dissipating device of the invention shields the spaces through the cover plate, so that the electric connection performance and the cooling capacity are guaranteed.

Other aspects and features of the invention will become apparent from the following detailed description with reference to the drawings. It should be known, however, that the drawings are designed for the purpose of illustration only. It should also be known that the drawings are only intended to conceptually illustrate the structures and flows described here, and unless otherwise noted, the drawings are not necessarily drawn to scale.

### BRIEF DESCRIPTION OF THE DRAWINGS

The invention will be more fully understood with reference to the following detailed description of the specific embodiments taken in conjunction with the accompanying drawings, in which like reference numerals refer to like elements in views throughout. Wherein:
FIG. 1 is a front view of one embodiment of an electric drive system involved in the invention;
FIG. 2 is a perspective view of the electric drive system in FIG. 1;
FIG. 3 is a schematic view of one embodiment of a heat dissipating device of the electric drive system involved in the invention, which is a perspective view;
FIG. 4 shows the internal structure of the heat dissipating device in FIG. 3 after removal of the cover plate on one side thereof; and
FIG. 5 shows the internal structure of the heat dissipating device of FIG. 3 after removal of the cover plate on another side thereof.

### DETAILED DESCRIPTION OF THE EMBODIMENT(S) OF THE INVENTION

In order to assist those skilled in the art to definitely understand the claimed subject matter of the invention, the specific embodiments of the invention are described in detail below with reference to the accompanying drawings.

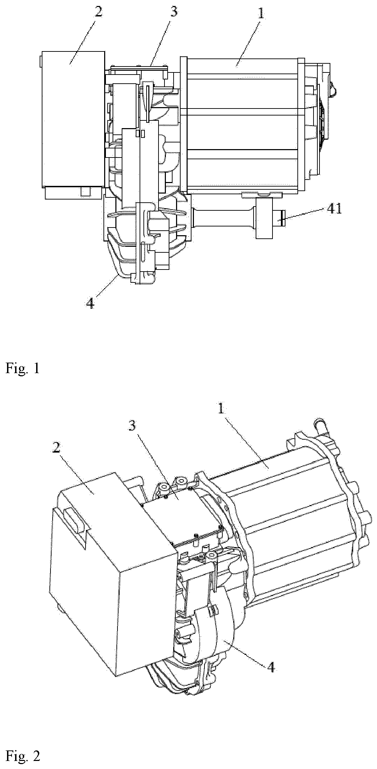

FIGS. 1 and 2 are respectively front view and perspective view of an electric drive system involved in the invention. As shown, the electric drive system includes a motor 1, a motor controller 2, and a heat dissipating device 3 located between the motor 1 and the motor controller 2. The motor 1 and the motor controller 2 are electrically connected to each other within the heat dissipating device 3, while the cooling system of the motor 1 and the cooling system of the motor controller 2 are connected via the heat dissipating device 3. Meanwhile, the heat produced by the electrical connection of the motor 1 and the motor controller 2 is dissipated by utilizing the cooling effect of the heat dissipating device 3.

In accordance with this example of the present invention, the electric drive system is an integrated electric drive system that integrates a gearbox 4 in addition to the motor 1 and the motor controller 2. Here, the motor 1, the motor controller 2 and the gearbox 4 are each an independent and separate package and are assembled together by a mechanical connection. The input shaft or output shaft direction of the motor 1 is parallel to the input shaft or output shaft (for the output shaft, see 41) of the gearbox 4. This arrangement is extremely compact and easy to mount onto the vehicle after integration. The mechanical connection between the motor 1, the motor controller 2, and the gearbox 4 may be: the end face of the motor 1 is connected with the end face of the motor-facing side of the gearbox 4 through a flange connection face, and the end face of the motor controller 2 is connected with the end face of the motor controller-facing side of the gearbox 4 through a flange connection face.

The heat dissipating device 3 is fixed on the gearbox 4 by, for example, the bolted connection. Between the heat dissipating device 3 and the motor 1 and between the heat dissipating device 3 and the motor controller 2 are hermetical connection to each other.

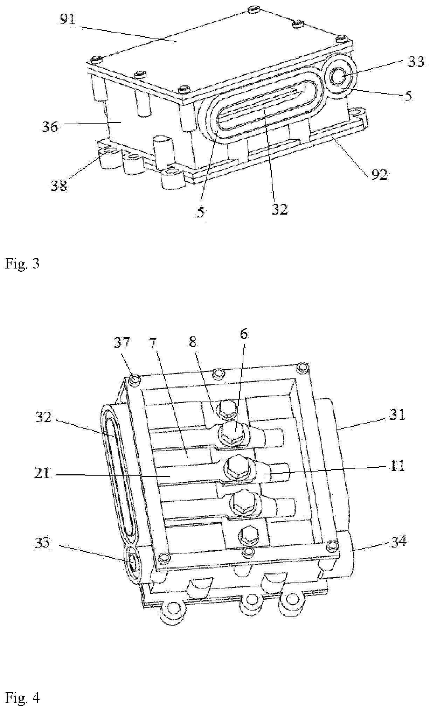

FIGS. 3-5 are structural schematic views of the heat dissipating device. In conjunction with these figures, the heat dissipating device 3 includes at least a first space (not labeled) and a second space (not labeled) spaced apart from the first space. The extended terminal 11 of the motor 1 is electrically connected with the extended terminal 21 of the motor controller 2 within the first space, while a runner 35 is disposed within the second space so that coolant liquid is conveyed between the motor controller 2 and the motor 1 through the runner 35.

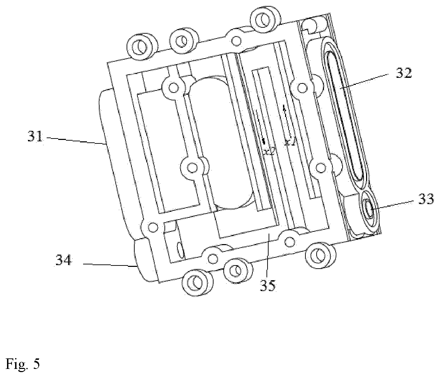

Referring to FIGS. 4 and 5, according to an example of the invention, the first space is disposed with a first inlet 31 facing the motor 1, and is disposed with a second inlet 32 facing the motor controller 2. The second space is disposed with a runner port 34 facing the motor 1 and is disposed with a runner port 33 facing the motor controller 2. In the specific example below, the runner port 34 is referred to as a first outlet 34 and the runner port 33 is referred to as a third inlet 33.

The extended terminal 11 of the motor 1 and the extended terminal 21 of the motor controller 2 enter the heat dissipating device 3 via the first inlet 31 and the second inlet 32, respectively, and are connected within the first space. The interior of the heat dissipating device 3 is also disposed with the runner 35 within the second space, the runner 35 connects with the third inlet 33 and the first outlet 34 (as shown in FIG. 5) to enable the liquid to enter the runner 35 from the third inlet 33 and further flow out from the first outlet 34, thereby conveying the coolant liquid between the motor controller 2 and the motor 1. The coolant liquid from the cooling system of the motor controller 2 enters into the runner 35 of the heat dissipating device 3 via the third inlet 33 and exits the runner 35 via the first outlet 34 to enter the cooling system of the motor 1. The coolant liquid may be water or a mixture of water and ethylene glycol. It should be noted that the running path of the coolant liquid flowing from the motor controller into the heat dissipating device and further into the motor in the invention is a part of the vehicle cooling circuit. In the operating state, the coolant liquid flows in one direction, i.e., the coolant liquid flows from the motor controller to the motor. In the non-operating state, the coolant liquid stays in respective cooling systems and the runner. According to this schematic and non-limiting example of the invention, the coolant liquid first enters the motor controller to cool it and then enters the motor 1 via the heat dissipating device 3, such running path makes the coolant liquid first cools the motor controller at a lower temperature, which is very beneficial for the cooling of some of the thermally sensitive electronics in the motor controller.

In this example, the first inlet 31 is a through port covering all of the terminals 11 of the motor 1, which may allow multiple terminals to enter the heat dissipating device 3 via one port, and the second inlet 32 is a through port covering all of the terminals 21 of the motor controller 2, allowing multiple terminals to enter the heat dissipating device 3 via one port. The terminals 11, 21 of the motor 1 and the motor controller 2 may be a plurality of bus bars, also referred to as copper bars. In the illustrated embodiment, the through ports are flat, elongated holes open at two sides of the heat dissipating device, each port accommodating three copper bars. Of course, the number of copper bars is not limited to three, and may be more or less than three. The number of copper bars depends on the phase line number of the motor, and the terminals 11, 21 of the motor 1 and the motor controller 2 are arranged to be correspondingly connected within the heat dissipating device 3. Additionally, it should be noted that in the example of the invention, the first inlet 31 and the second inlet 32 respectively receive a plurality of wiring terminals at the same time, and in other examples, the first inlet 31 and the second inlet 32 may each include a plurality of inlets, e.g., one inlet corresponding to one wiring terminal; similarly, as an optional example, the first space may be further partitioned into a plurality of small spaces, each of which may accommodate one or more terminals.

Returning to FIG. 4, the third inlet 33 is a round hole adjacent to the second inlet 32, and the first outlet 34 is a round hole adjacent to the first inlet 31. The first inlet 31 and the first outlet 34 interface with the terminal port and the cooling system port of the motor 11, respectively, and the second inlet 32 and the third inlet 33 interface with the terminal port and the cooling system port of the motor controller 2, respectively. A sealing strip 5, which is generally along the shape of the hole, is disposed on each of the aforementioned outlets and inlets of the heat dissipating device 3 to interface with the motor 1 and the motor controller 2 to achieve gas sealing and fluid sealing. It may be known that the first inlet is not necessarily disposed on the side of the motor and it may be disposed on the side of the motor controller. Also, the first outlet is not necessarily disposed on a same side with the first inlet, but may be separately disposed. The same is true for the second inlet and the third inlet. It should also be noted that the shapes of various inlets and outlets referred to herein are for the purpose of mating the terminal ports to which they are to be connected, and in practical application, their shapes are not limited to the shapes as described here.

Electrical connections between the terminals 11, 21 from the motor 1 and the motor controller 2 are achieved within the first space of the heat dissipating device 3, while the coolant liquid passes in the runner 35 located within the second space. As can be seen, the heat dissipating device 3 of the invention enables the connection of the electrical connection and the cooling system between the motor 1 and the motor controller 2 without the need for other wiring harnesses or water pipes, and since the first space is spaced apart from the second space (the relation of the first space and the second space is further described below), the electrical connection is not affected at all by the coolant liquid. Meanwhile, the runner of the coolant liquid is arranged below corresponding to the terminal connection within the second space, so that the coolant liquid can further conduct heat dissipation at the terminal connection.

The heat dissipating device 3 is of a box-like structure. The box-like structure includes a housing 36 that is internally divided by a divider (not shown) into a first space for electrical connection of the motor 1 and the motor controller 2 and a second space for the cooling system connection of the motor 1 and the motor controller 2. The first space is shown in FIG. 4, and FIG. 5 is to invert the heat dissipating device of FIG. 4, showing the second space. The divider may be separate or integral with the housing. The terminals 11, 21 of the motor 1 and the motor controller 2 enter into the first space via the first inlet 31 and the second inlet 32 and are connected. In the illustrated embodiment, the copper bar are each disposed with a connection hole at ends, the copper bar connection is achieved by aligning the connection holes of the copper bars from the motor and the copper bars from the motor controller and then screwing screws 6.

The runner 35 is disposed in the second space and passes through below the terminals 11, 21. In order to increase the cooling area, the path of the runner 35 is concentrated as close as possible where large heat is produced by the connection of terminals 11, 21. As can be known from FIG. 5, the runner 35 is arranged as a bending path below the place where the terminals of both of the motor and the motor controller are connected, the coolant liquid traverses below the terminal in the direction x1 shown in the figure, and turns to traverse back below the terminal in the opposite direction x2 as illustrated, thus increasing the cooling area for terminals.

An insulating pad 7 is arranged between the terminals 11, 21 and the divider not shown to avoid electrical conduction. The insulating pad 7 is also thermally conductive, which is beneficial for facilitating the heat dissipating effect of the coolant liquid in the runner. An insulating block 8 is additionally disposed at the place where the terminals are connected, and is used for pressing the terminals against the pad.

The heat dissipating device 3 further comprises cover plates 91, 92, with first mounting holes 37 left on the housing 36 of the heat dissipating device, and the first cover plate 91 is mounted onto the heat dissipating device 3 by bolts or screws to shield the first space. The second cover plate 92 shields the second space, and the mounting principle of the second cover plate 92 is same as the first cover plate 91.

Second mounting holes 38 are also disposed on the outside of the housing 36 of the heat dissipating device for connection of the heat dissipating device 3 to the gearbox 4.

Referring back to FIGS. 1 and 2, the installation process of the electric drive system involved in the invention is described below. First, prior to the installation, the second cover plate 92 may be mounted onto the heat dissipating device 3 to shield the second space. Then, the heat dissipating device 3 and the gearbox 4 are fixed together through second mounting holes, and then the motor 1 is fixed to the motor side of the gearbox 4 through a mounting end face. After the motor 1 is mounted, the terminal of the motor 1 enters the interior of the heat dissipating device 3 through the first inlet, and an input runner of the cooling system of the motor 1 interfaces with the runner of the heat dissipating device 3 through the first outlet and is sealed. The motor controller 2 is fixed to another side of the gearbox 4 through a mounting end face, the terminal of the motor controller 2 enters the interior of the heat dissipating device 3 through the second inlet, and an output runner of the motor controller 2 interfaces with the runner of the heat dissipating device 3 through the third inlet and is sealed. The insulating pad has been arranged within the heat dissipating device 3. And the terminals are pressed against the pad through the insulating block. The terminals of the motor 1 and the terminals of the motor controller 2 are aligned and connected together by screws. Finally, the first cover plate 91 is mounted onto the heat dissipating device 3 through first mounting holes 37 to shield the first space.

Depending on the driving mode of the automobile, and especially the electric automobile, such as two-wheel-drive or four-wheel-drive, or front-wheel-drive or rear-wheel-drive, the electric drive system involved in the invention may be arranged in the front of the automobile, on the rear of the automobile, or in the front of and on the rear of the automobile.

## Claims

1. An electric drive system, comprising: a motor (1), a motor controller (2), and a heat dissipating device (3) located between the motor (1) and the motor controller (2), **characterized in that**
the heat dissipating device (3) comprises at least a first space and a second space which is separated from the first space, wherein, the extended terminal (11) of the motor (1) is electrically connected with the extended terminal (21) of the motor controller (2) within the first space, a runner (35) is disposed within the second space, so that coolant liquid is conveyed between the motor controller (2) and the motor (1) through the runner (35).

2. The electric drive system of claim 1, wherein, the first space is disposed with a first inlet (31) facing the motor (1) so that the extended terminal (11) of the motor (1) enters the first space via the first inlet (31), and is disposed with a second inlet (32) facing the motor controller (2) so that the extended terminal (21) of the motor controller (2) enters the first space via the second inlet (32), the extended terminal (11) and the extended terminal (21) are electrically connected within the first space, the second space is disposed with a runner port (34) in communication with the runner (35) and facing the motor (1), and is disposed with a runner port (33) in communication with the runner (35) and facing the motor controller (2).

3. The electric drive system of claim 1, wherein: the motor (1) and the motor controller (2) are arranged on opposite sides of the heat dissipating device (3).

4. The electric drive system of claim 3, wherein: a gearbox (4) connected with the motor (1) and the motor controller (2) is located between the motor (1) and the motor controller (2), and the heat dissipating device (3) is fixed on the gearbox (4).

5. The electric drive system of claim 4, wherein: the runner port (33) disposed facing the motor controller (2) is adjacent to the second inlet (32), and the runner port (34) disposed facing the motor (1) is adjacent to the first inlet (31).

6. The electric drive system according to any one of claims 1 to 5, wherein: the runner (35) is arranged to be bent below the area where the terminals of the motor and the motor controller (11, 21) are connected to increase the cooling area of the runner (35) to the terminals (11, 21).

7. The electric drive system of claim 6, wherein: the extended terminal (11, 21) of the motor or the motor controller is a plurality of bus bars for a multi-phase phase line connection of the motor or the motor controller, and the terminal (11) of the motor and the terminal (21) of the motor controller are correspondingly connected inside the heat dissipating device (3).

8. The electric drive system of claim 6, wherein: the heat dissipating device (3) comprises a thermally conductive insulating pad (7) which is arranged between the terminals (11, 21) of the motor and motor controller and the runner (35).

9. An automobile, wherein: the automobile comprises the electric drive system according to any one of claims 1 to 8, the electric drive system being arranged in the front of, on the rear of, or in the front of and on the rear of the automobile.

## Patentansprüche

1. Elektrisches Antriebssystem, das Folgendes aufweist: einen Motor (1), eine Motorsteuerung (2) und eine Wärmeableitungsvorrichtung (3), befindlich zwischen dem Motor (1) und der Motorsteuerung (2), **dadurch gekennzeichnet, dass**
die Wärmeableitungsvorrichtung (3) zumindest einen ersten Raum und einen zweiten Raum, der vom ersten Raum getrennt ist, aufweist, wobei der erweiterte Anschluss (11) des Motors (1) elektrisch mit dem erweiterten Anschluss (21) der Motorsteuerung (2) innerhalb des ersten Raums verbunden ist, ein Läufer (35) innerhalb des zweiten Raumes angeordnet ist, sodass Kühlmittelflüssigkeit zwischen der Motorsteuerung (2) und dem Motor (1) über den Läufer (35) gefördert wird.

2. Elektrisches Antriebssystem nach Anspruch 1, wobei der erste Raum mit einem ersten Einlass (31), der zum Motor (1) zeigt, sodass der erweiterte Anschluss (11) des Motors (1) über den ersten Einlass (31) in den ersten Raum eintritt, angeordnet ist und mit einem zweiten Einlass (32), der zur Motorsteuerung (2) zeigt, sodass der erweiterte Anschluss (21) der Motorsteuerung (2) über den zweiten Einlass (32) in den ersten Raum eintritt, angeordnet ist, wobei der erweiterte Anschluss (11) und der erweiterte Anschluss (21) innerhalb des ersten Raumes elektrisch verbunden sind, wobei der zweite Raum mit einem Läuferanschluss (34) in Verbindung mit dem Läufer (35) und zum Motor (1) zeigend angeordnet ist, und mit einem Läuferanschluss (33) in Verbindung mit dem Läufer (35) und zur Motorsteuerung (2) zeigend angeordnet ist.

3. Elektrisches Antriebssystem nach Anspruch 1, wobei: der Motor (1) und die Motorsteuerung (2) auf einander gegenüberliegenden Seiten der Wärmeableitungsvorrichtung (3) angeordnet sind.

4. Elektrisches Antriebssystem nach Anspruch 3, wobei: ein Getriebe (4), verbunden mit dem Motor (1) und der Motorsteuerung (2), zwischen dem Motor (1) und der Motorsteuerung (2) befindlich ist, und wobei die Wärmeableitungsvorrichtung (3) am Getriebe (4) befestigt ist.

5. Elektrisches Antriebssystem nach Anspruch 4, wobei: der Läuferanschluss (33), der so angeordnet ist, dass er zur Motorsteuerung (2) zeigt, angrenzend an den zweiten Einlass (32) ist, und der Läuferanschluss (34), der so angeordnet ist, dass er zum Motor (1) zeigt, angrenzend an den ersten Einlass (31) ist.

6. Elektrisches Antriebssystem nach einem der Ansprüche 1 bis 5, wobei: der Läufer (35) angeordnet ist, um unter den Bereich gebogen zu werden, wo die Anschlüsse des Motors und der Motorsteuerung (11, 21) verbunden werden, um den Kühlbereich des Läufers (35) zu den Anschlüssen (11, 21) zu vergrößern.

7. Elektrisches Antriebssystem nach Anspruch 6, wobei: der erweiterte Anschluss (11, 21) des Motors oder der Motorsteuerung eine Vielzahl von Busschienen für eine mehrphasige Leitungsverbindung des Motors oder der Motorsteuerung ist und wobei der Anschluss (11) des Motors und der Anschluss (21) der Motorsteuerung entsprechend im Inneren der Wärmeableitungsvorrichtung (3) verbunden sind.

8. Elektrisches Antriebssystem nach Anspruch 6, wobei: die Wärmeableitungsvorrichtung (3) ein thermisch leitfähiges Isolierfeld (7) aufweist, das zwischen den Anschlüssen (11, 21) des Motors und der Motorsteuerung und dem Läufer (35) angeordnet ist.

9. Kraftfahrzeug, wobei: das Kraftfahrzeug das elektrische Antriebssystem nach einem der Ansprüche 1 bis 8 aufweist, wobei das elektrische Antriebssystem im vorderen Teil, am hinteren Teil oder im vorderen Teil und am hinteren Teil des Kraftfahrzeugs angeordnet ist.

## Revendications

1. Système d'entraînement électrique, comprenant : un moteur (1), un dispositif de commande de moteur (2), et un dispositif de dissipation de chaleur (3) situé entre le moteur (1) et le dispositif de commande de moteur (2), **caractérisé en ce que** le dispositif de dissipation de chaleur (3) comprend au moins un premier espace et un deuxième espace qui est séparé du premier espace, dans lequel la borne étendue (11) du moteur (1) est électriquement connectée à la borne étendue (21) du dispositif de commande de moteur (2) à l'intérieur du premier espace, un canal (35) est disposé à l'intérieur du deuxième espace, de sorte que du liquide de refroidissement soit transporté entre le dispositif de commande de moteur (2) et le moteur (1) à travers le canal (35).

2. Système d'entraînement électrique selon la revendication 1, dans lequel le premier espace est disposé avec une première entrée (31) faisant face au moteur (1) de sorte que la borne étendue (11) du moteur (1) entre dans le premier espace via la première entrée (31), et est disposé avec une deuxième entrée (32) faisant face au dispositif de commande de moteur (2) de sorte que la borne étendue (21) du dispositif de commande de moteur (2) entre dans le premier espace via la deuxième entrée (32), la borne étendue (11) et la borne étendue (21) sont électriquement connectées à l'intérieur du premier espace, le deuxième espace est disposé avec un orifice de canal (34) en communication avec le canal (35) et faisant face au moteur (1), et est disposé avec un orifice de canal (33) en communication avec le canal (35) et faisant face au dispositif de commande de moteur (2).

3. Système d'entraînement électrique selon la revendication 1, dans lequel : le moteur (1) et le dispositif de commande de moteur (2) sont agencés sur des côtés opposés du dispositif de dissipation de chaleur (3).

4. Système d'entraînement électrique selon la revendication 3, dans lequel : une boîte de vitesses (4) connectée au moteur (1) et au dispositif de commande de moteur (2) est située entre le moteur (1) et le dispositif de commande de moteur (2), et le dispositif de dissipation de chaleur (3) est fixé sur la boîte de vitesses (4).

5. Système d'entraînement électrique selon la revendication 4, dans lequel : l'orifice de canal (33) disposé face au dispositif de commande de moteur (2) est adjacent à la deuxième entrée (32), et l'orifice de canal (34) disposé face au moteur (1) est adjacent à la première entrée (31).

6. Système d'entraînement électrique selon l'une quelconque des revendications 1 à 5, dans lequel : le canal (35) est agencé pour être courbé au-dessous de la zone où les bornes du moteur et du dispositif de commande de moteur (11, 21) sont connectées pour augmenter la zone de refroidissement du canal (35) jusqu'aux bornes (11, 21).

7. Système d'entraînement électrique selon la revendication 6, dans lequel : la borne étendue (11, 21) du moteur ou du dispositif de commande de moteur est une pluralité de barres omnibus pour une connexion de ligne de phase multiphase du moteur ou du dispositif de commande de moteur, et la borne (11) du moteur et la borne (21) du dispositif de commande de moteur sont connectées de façon correspondante à l'intérieur du dispositif de dissipation de chaleur (3).

8. Système d'entraînement électrique selon la revendication 6, dans lequel : le dispositif de dissipation de chaleur (3) comprend un coussin d'isolation thermoconducteur (7) qui est agencé entre les bornes (11, 21) du moteur et du dispositif de commande de moteur et le canal (35).

9. Automobile, dans laquelle : l'automobile comprend le système d'entraînement électrique selon l'une quelconque des revendications 1 à 8, le système d'entraînement électrique étant agencé à l'avant de, à l'arrière de, ou à l'avant de et à l'arrière de l'automobile.
